# FASCICULE DE BREVET EUROPEEN

(11) **EP 1 631 473 B1**
(45) Date de publication et mention de la délivrance du brevet: **20.09.2006**
(21) Numéro de dépôt: 04767274.6
(22) Date de dépôt: 07.06.2004
(51) Int. Cl.: B60K 20/06, F16H 59/02

(54) **DISPOSITIF POUR LA COMMANDE AUTOMATISEE DES CHANGEMENTS DE RAPPORTS D'UNE TRANSMISSION**
VORRICHTUNG ZUR AUTOMATISIERTEN STEUERUNG DES WECHSELS VON ÜBERSETZUNGSVERHÄLTNISSEN IN EINEM GETRIEBE
DEVICE FOR THE AUTOMATED CONTROL OF CHANGING RATIOS IN A TRANSMISSION

(30) Priorité: 06.06.2003 FR 0306836
(43) Date de publication de la demande: 08.03.2006
(73) Titulaire: Renault s.a.s., 92100 Boulogne Billancourt (FR)
(72) Inventeur: RYKAERT, Jean-Jacques, F-93250 Villemomble (FR)
(86) Numéro de dépôt international: PCT/FR2004/001408
(87) Numéro de publication internationale: WO 2004/110803

(56) Documents cités:
- EP-A- 0 999 085
- EP-A- 1 180 618
- EP-A- 1 211 119
- FR-A- 2 724 347

## Description

La présente invention concerne un dispositif pour la commande automatisée des changements de rapports d'une transmission.

Plus particulièrement, elle concerne un tel dispositif dans un véhicule, ce véhicule comportant une colonne de direction sur laquelle est monté un module de commande comportant un boîtier d'habillage monté en avant du volant, ce dispositif comprenant un moyen de sélection d'un mode de fonctionnement de la transmission, notamment d'un levier de changement de type de transmission situé sur le plancher ou sur la face avant de la planche de bord du véhicule, un moyen de changement de rapport commandé manuellement par impulsions, composé de deux boutons destinés, à augmenter et diminuer le rang du rapport de transmission.

Un dispositif pour la commande automatisée des changements de rapports d'une transmission, appelée aussi boîte de vitesse robotisée ou boîte de vitesse automatique, est une boîte mécanique classique à laquelle on a adjoint un automate intervenant au niveau du passage des vitesses. Le conducteur peut choisir de rouler en mode automatique ou semi-automatique. Dans le premier cas, les changements de rapports sont entièrement pilotés par le calculateur de la boite de vitesse, exactement comme avec une transmission automatique classique. En mode semi-automatique, le conducteur actionne lui-même le sélecteur de rapport, comme avec une boîte manuelle.

Actuellement, le sélecteur de rapport est agencé à proximité ou sur le volant, pour être accessible facilement par le conducteur. Par exemple, ces sélecteurs sont deux boutons « plus » et « moins », positionnés sur le volant, du type « contact » qui sont actionnés par une simple pression sur le sélecteur.

Dans une telle solution, le sélecteur est intégré au volant et, par conséquence, suit les mouvements de rotation de celui-ci. Ainsi les sélecteurs, initialement positionnés à droite et à gauche sur le volant, peuvent se retrouver dans la partie supérieure et inférieure du volant ou même en position totalement inversée, lors de la rotation du volant, ce qui peut induire en erreur le conducteur, surtout lors d'une manipulation en situation d'urgence.

Il existe d'autres types de sélecteurs agencés à proximité du volant. Par exemple des manettes montées de chaque côté de la colonne de direction, et situées en avant du volant. Le changement de rapport est actionné par le basculement de ces manettes. Mais cette solution présente l'inconvénient d'être encombrante, à cause du débattement des manettes, dont il faut tenir compte pour l'intégration d'autres fonctions près du volant.

Le document FR-2 792 085-B1 décrit une solution pour pallier à ces inconvénients, en proposant un dispositif pour la commande au volant des changements de rapports d'une transmission de véhicule automobile comportant un levier positionné en avant du volant sur la colonne de direction, qui permet de sélectionner le mode de fonctionnement de la transmission et qui comporte à son extrémité une tête de manipulation pour actionner manuellement, par impulsion, des changements de rapport par les moyens automatisés de la transmission qui équipent la boîte de vitesse mécanique.

Cette solution offre un dispositif de commande de boîte de vitesse automatisée accessible depuis le volant. Cependant le levier multifonctions entraîne une gestion difficile des différentes fonctions de la boîte de vitesse. De plus le débattement des manettes et le volume du boîtier de maintien de la manette occupent un espace important devant le tableau de bord.

La présente invention vise à pallier à ses inconvénients en offrant un dispositif pour la commande automatisée des changements de rapports d'une transmission du type décrit précédemment, caractérisé en ce que le moyen de changement de rapport est composé de deux boutons placé sur une branche fixe qui s'étend étant depuis la paroi du boîtier de part et d'autre d'un plan vertical passant par l'axe d'une ouverture centrale cylindrique du boîtier.

Ce dispositif offre à l'utilisateur une solution ergonomique, simple d'utilisation et par conséquence sûre en situation d'urgence.

Selon un autre mode de réalisation les branches s'étendent dans une direction sensiblement oblique symétriquement par rapport au plan.

Dans un autre mode de réalisation, les branches s'étendent depuis la paroi supérieure du boîtier.

Selon un autre mode de réalisation le boîtier du module comporte une partie centrale et deux parties latérales, et en ce que les branches s'étendent sur les parties latérales du boîtier du module.

Selon un autre mode de réalisation les branches sont fixées sur le module de commande par encliquetage.

Dans une variante de l'invention, les boutons de changement de rapport de transmission sont situés sur la face avant ou sur la face arrière des branches.

Selon un autre mode de réalisation le bouton destiné à augmenter le rang du rapport est situé à la droite du conducteur, et le bouton destiné à diminuer le rang du rapport est situé à la gauche du conducteur.

D'autres caractéristiques, et avantages de la présente invention apparaîtront à la lecture de la description détaillée qui va suivre, pour la compréhension de laquelle on se reportera aux dessins annexés dans lesquels :
la figure 1 représente une vue de face en perspective d'un boîtier de module de commande selon l'invention
la figure 2 représente la vision du tableau de bord pour un conducteur d'un véhicule équipé du dispositif selon l'invention.

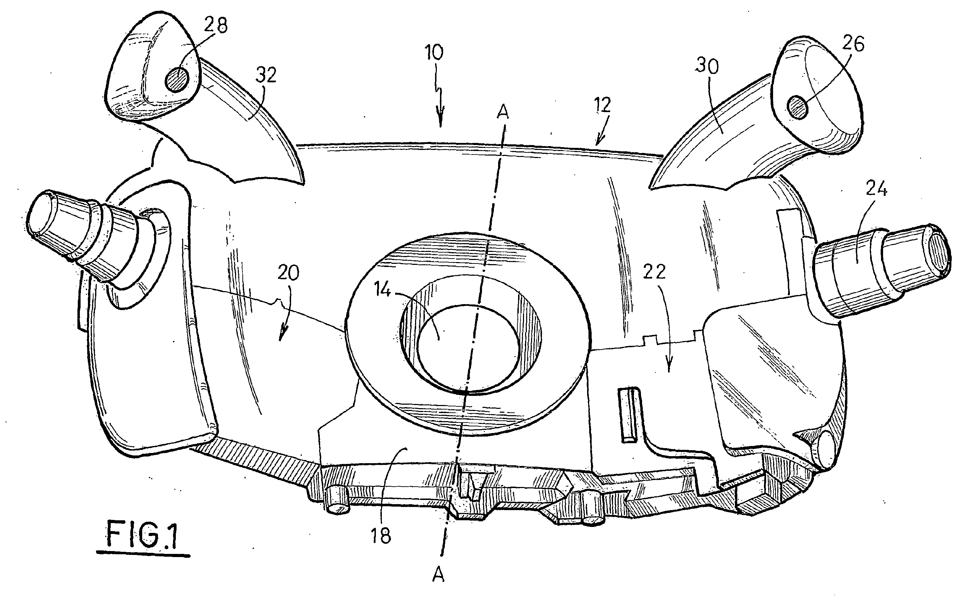

La figure 1 représente un boîtier (10) de module (12) qui peut être monté sur une colonne de direction, non représentée, par l'ouverture centrale cylindrique (14). Ce boîtier est situé en avant du volant, de manière à ce que sa paroi supérieure (16) soit située, dans un plan horizontal, en dessous de l'écran du tableau de bord, non représenté. La paroi supérieure (16) recouvre le module (12) afin de cacher certaines formes non esthétiques du module, et de l'intégrer à la planche de bord.

Tel que représenté, ce module (10) est formé d'une partie centrale (18) et de deux parties latérales (20, 22), et de moyens (24) d'activation de fonctions, accessibles depuis le volant par les mains d'un conducteur. Ces moyens peuvent être des boutons ou des leviers, qui activent des fonctions telles que les essuie-glaces, les phares ou encore la radio, qui sont situées, habituellement, à proximité du volant. Les moyens de commande représentés sont du type court à faible débattement, car elles sont intégrés à un module de commande sous volant du type décrit dans le brevet FR-2829071-A1.

Les fonctions décrites précédemment peuvent être activées par différents mouvements des moyens de commande (24), par exemple, par débattement par rotation, ou par appui.

Le module (12) représenté sur la figure 1 comporte, en plus des moyens de commande (24) décrits précédemment, des boutons (26, 28) d'un dispositif pour la commande automatisée des changements de rapports d'une transmission. Ce dispositif est formé d'un moyen de sélection, non représenté, d'un mode de fonctionnement de la transmission, notamment d'un levier de changement de type de transmission situé sur le plancher ou la face avant de la planche de bord. Ce levier permet de sélectionner les types de rapport, comme une boîte manuelle, tels que la position Parking, Arrière, Route ou Ville.

Le dispositif selon l'invention comprend aussi des moyens pour changer le rapport de transmission. Ce moyen est formé de deux boutons (26, 28) destinés à augmenter ou diminuer le rang du rapport de transmission.

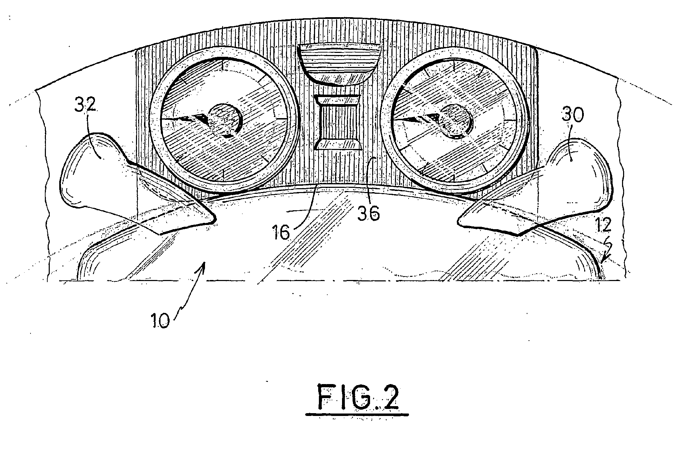

La figure 1 et 2 illustrent le dispositif selon l'invention, et représentent chaque bouton (26, 28) sur une branche (30, 32) qui s'étend depuis la paroi du boîtier (10) de part et d'autre d'un plan vertical passant par l'axe de symétrie (A-A) vertical du volant, dans une direction sensiblement oblique. Les boutons (26, 28) sont situés à l'extrémité de chacune des branches (30, 32) qui sont placées à l'avant du volant. Les boutons sont placés sur le périmètre d'un disque de diamètre sensiblement égal à celui du volant, et à la même hauteur que la position « 10h10 » des mains, qui est la position de conduite idéale. Avantageusement les moyens pour changer le rapport de transmission sont commandés manuellement par impulsions. Ce système de commande permet d'éviter le débattement des branches (30, 32) dans un plan limitant l'accès visuel au tableau de bord.

La figure 2 représente la vision de la planche de bord pour un conducteur d'un véhicule équipé d'un dispositif selon l'invention. Tel que représenté, les branches (30, 32), fixes, offrent une vision complète de l'écran (36) d'affichage du tableau de bord, tout en intégrant de nouvelles fonctions sur le module de commande. Les branches (30, 32) sont maintenues au module de commande de manière à ne pas couvrir cet écran.

La disposition des branches (30, 32) permet au conducteur d'avoir une bonne visibilité du tableau de bord, quelque soit sa taille et sa position dans le siège, et d'avoir un accès facile, depuis le volant, quelque soit la taille de ses mains. Cette disposition est réalisée en fonction du type de module utilisé. Pour un module à commandes courtes, tel qu'illustré aux figures 1 et 2, comprenant deux parties latérales (20, 22), les branches (30, 32) sont fixées à ces parties latérales pour être suffisamment espacées et offrir une bonne visibilité de la planche de bord. Pour un module classique, c'est à dire formé en un seul bloc, les branches sont alors disposées selon un angle déterminé, par différents essais, pour obtenir une vue dégagée de la planche de bord.

Dans un mode de réalisation particulier, les boutons (26, 28) sont situés respectivement à droite et à gauche sur le boîtier du module, ceci afin de pouvoir réaliser une augmentation de rapport vers la droite, de la même manière que sur une boîte manuelle et de pouvoir actionner par réflexe, en situation d'urgence, le bon changement de rapport.

Les branches pourront être fixées au boîtier (10) du module (12) par encliquetage, ce qui permet de ne réaliser qu'un seul type de module (12), malgré la diversité des options offertes pour un même véhicule.. De plus ce mode de réalisation offre une manipulation simple et facile pour l'opérateur qui n'a plus qu'à rajouter les branches correspondantes, sur la ligne de fabrication du véhicule.

L'invention n'est nullement limitée au mode de réalisation décrit et illustré qui n'a été donné qu'à titre d'exemple.

## Revendications

1. Dispositif pour la commande automatisée des changements de rapports d'une transmission dans un véhicule, comprenant un module (12) de commande comportant un boîtier (10) d'habillage pour être monté sur une colonne de direction du véhicule en avant du volant, ce dispositif comprenant un moyen de sélection d'un mode de fonctionnement de la transmission, notamment d'un levier de changement de type de transmission situé sur le plancher ou sur la face avant de la planche de bord du véhicule et un moyen de changement de rapport commandé manuellement par impulsions destinés à augmenter et diminuer le rang du rapport de transmission, **caractérisé en ce qu'**il est composé de deux boutons (26, 28), chaque bouton (26, 28) étant placé sur une branche (30, 32) fixe qui s'étend depuis la paroi du boîtier (10) de part et d'autre d'un plan vertical passant par l'axe d'une ouverture centrale cylindrique (14) du boîtier (10).

2. Dispositif pour la commande automatisée de changements de rapports d'une transmission selon la revendication 1, **caractérisé en ce que** les branches s'étendent dans une direction sensiblement oblique symétriquement par rapport au plan.

3. Dispositif-pour la commande automatisée de changements de rapports d'une transmission selon les revendications 1 et 2, **caractérisé en ce que** les branches s'étendent depuis la paroi supérieure du boîtier.

4. Dispositif pour la commande automatisée de changements de rapports d'une transmission selon la revendication1, **caractérisé en ce que** le boîtier (10) du module (12) comporte une partie centrale (18) et deux parties latérales (20, 22), et **en ce que** les branches (30, 32) s'étendent sur les parties latérales (20, 22) du boîtier (10) du module (12).

5. Dispositif selon l'une des revendication précédentes, **caractérisé en ce que** les branches (30, 32) sont fixées sur le module (12) de commande par encliquetage.

6. Dispositif selon l'une des revendications précédentes, **caractérisé en ce que** les boutons (26, 28) de changement de rapport de transmission sont situés sur la face avant ou sur la face arrière des branches (30, 32).

7. Dispositif selon l'une des revendications précédentes, **caractérisé en ce que** le bouton (26) de changement de rapport « plus » est situé à la droite du conducteur, et le bouton (30) de changement de rapport « moins » est situé à la gauche du conducteur.

## Claims

1. Device for the automated control of transmission ratio changes in a vehicle, comprising a control module (12) having a casing (10) for mounting on a steering column of the vehicle, this device comprising a means of selecting an operating mode of the transmission, particularly of a lever for changing the transmission type, located on the floor or on the front of the dashboard of the vehicle, and a means of changing the ratio controlled manually by pulses intended to increase and decrease the transmission ratio, **characterized in that** it consists of two buttons (26, 28), each button (26, 28) being placed on a fixed branch (30, 32) which extends from the wall of the casing (10) on either side of a vertical plane passing through the axis of a central cylindrical hole (14) in the casing (10).

2. Device for the automated control of transmission ratio changes according to Claim 1, **characterized in that** the branches extend in a substantially oblique direction and symmetrically with respect to the plane.

3. Device for the automated control of transmission ratio changes according to Claims 1 and 2, **characterized in that** the branches extend from the upper wall of the casing.

4. Device for the automated control of transmission ratio changes according to Claim 1, **characterized in that** the casing (10) of the module (12) has a central part (18) and two lateral parts (20, 22), and **in that** the branches (30, 32) extend on the lateral parts (20, 22) of the casing (10) of the module (12).

5. Device according to one of the preceding claims, **characterized in that** the branches (30, 32) are fixed to the control module (12) by a snap fit.

6. Device according to one of the preceding claims, **characterized in that** the buttons (26, 28) for changing the transmission ratio are located on the front faces or the rear faces of the branches (30, 32).

7. Device according to one of the preceding claims, **characterized in that** the "up" ratio change button (26) is located on the right of the driver, and the "down" ratio change button (30) is located on the left of the driver.

## Patentansprüche

1. Vorrichtung zur automatisierten Steuerung des Schaltens von Gangstufen eines Wechsels von Übersetzungsverhältnissen eines Getriebes in einem Fahrzeug mit einem Steuermodul (12), das ein Abdeckungsgehäuse (10) zur Montage an einer Lenksäule des Fahrzeugs vor dem Lenkrad aufweist, wobei diese Vorrichtung ein Mittel zur Wahl eines Betriebsmodus des Getriebes, insbesondere einen Getriebe-Schalthebel, der sich auf dem Boden oder auf der Vorderseite des Armaturenbretts des Fahrzeugs befindet, und ein durch Impulse manuell gesteuertes Mittel zum Wechsel des Übersetzungsverhältnisses umfasst, wobei die Impulse den Rang des Übersetzungsverhältnisses erhöhen oder verringern sollen, **dadurch gekennzeichnet, dass** sie aus zwei Knöpfen (26, 28) besteht, die an einem feststehenden Arm (30, 32) platziert sind, welcher sich von der Wand des Gehäuses (10) auf beiden Seiten einer die Achse einer mittleren zylindrischen Öffnung (14) des Gehäuses (10) durchquerenden vertikalen Ebene erstreckt.

2. Vorrichtung zur automatisierten Steuerung des Wechsels von Übersetzungsverhältnissen eines Getriebes nach Anspruch 1, **dadurch gekennzeichnet, dass** sich die Arme symmetrisch zur Ebene in einer im Wesentlichen schräg verlaufenden Richtung erstrecken.

3. Vorrichtung zur automatisierten Steuerung des Wechsels von Übersetzungsverhältnissen eines Getriebes nach Anspruch 1 und 2, **dadurch gekennzeichnet, dass** sich die Arme von der oberen Wand des Gehäuses erstrecken.

4. Vorrichtung zur automatisierten Steuerung des Wechsels von Übersetzungsverhältnissen eines Getriebes nach Anspruch 1, **dadurch gekennzeichnet, dass** das Gehäuse (10) des Moduls (12) einen mittleren Teil (18) und zwei Seitenteile (20, 22) aufweist und dass sich die Arme (30, 32) an den Seitenteilen (20, 22) des Gehäuses (10) des Moduls (12) erstrecken.

5. Vorrichtung nach einem der vorhergehenden Ansprüche, **dadurch gekennzeichnet, dass** die Arme (30, 32) durch Einrasten an dem Steuermodul (12) befestigt sind.

6. Vorrichtung nach einem der vorhergehenden Ansprüche, **dadurch gekennzeichnet, dass** die Übersetzungsverhältniswechselknöpfe (26, 28) an der Vorderseite oder an der Rückseite der Arme (30, 32) angeordnet sind.

7. Vorrichtung nach einem der vorhergehenden Ansprüche, **dadurch gekennzeichnet, dass** der Knopf (26) zum Wechsel des Übersetzungsverhältnisses "nach oben" rechts von Fahrer und der Knopf (30) zum Wechsel des Übersetzungsverhältnisses "nach unten" links vom Fahrer angeordnet ist.
